# EUROPÄISCHE PATENTSCHRIFT

(11) **EP 4 467 044 B1**
(45) Veröffentlichungstag und Bekanntmachung des Hinweises auf die Patenterteilung: **23.09.2026**
(21) Anmeldenummer: 24177600.4
(22) Anmeldetag: 23.05.2024
(51) Int. Cl.: A47J 47/14, A45C 11/20, A45C 13/02

(54) **TRAGBARER BEHÄLTER ZUM TRANSPORT VON FRISCH ZUBEREITETEN SPEISEN UND/ODER WAREN BZW. PRODUKTEN**
PORTABLE CONTAINER FOR TRANSPORTING FRESHLY PREPARED MEALS AND/OR GOODS OR PRODUCTS
RÉCIPIENT PORTATIF POUR LE TRANSPORT DE REPAS ET/OU DE MARCHANDISES FRAÎCHEMENT PRÉPARÉS PRODUITS

(30) Priorität: 23.05.2023 DE 102023113478
(43) Veröffentlichungstag der Anmeldung: 27.11.2024
(73) Patentinhaber: Nuhaj, Sejdi, 47475 Kamp-Lintfort (DE)
(72) Erfinder: Nuhaj, Sejdi, 47475 Kamp-Lintfort (DE)
(74) Vertreter: Weisbrodt, Bernd

(56) Entgegenhaltungen:
- DE-U1- 202009 001 970
- US-A- 5 630 537
- US-A1- 2007 186 579
- US-A1- 2018 193 843

## Beschreibung

Die vorliegende Erfindung betrifft einen tragbaren Behälter zum Transport von frisch zubereiteten Speisen und/oder Waren bzw. Produkten, insbesondere zur Verwendung für Essenslieferservices, insbesondere Lieferdienste von vorverarbeiteten oder vorgekochten Lebensmitteln, nachfolgend auch Transportbox genannt.

Lieferdienste befassen sich in der Regel mit dem sachgerechten Transportieren von Waren bzw. Produkten zwischen einem Händler bzw. Hersteller und einem Kunden. Zum Transport können beispielsweise Transportmittel wie Fahrräder oder Kraftfahrzeuge zum Einsatz kommen. Essenslieferdienste liefern insofern vorverarbeitete oder vorgekochte Lebensmittel, insbesondere Pizza, Aufläufe, Burger und/oder dergleichen. Einkaufslieferdienste liefern beispielsweise Einkäufe eines Kunden, die dieser über eine Webseite oder ein sogenanntes Online-Portal bestellt hat, teilweise mit der Möglichkeit einer sogenannten Online-Bezahlung.

Die Möglichkeit, sich frisch zubereitete Speisen und/oder Waren bzw. Produkte liefern zu lassen ist lange bekannt und wird von Menschen umfangreich in verschiedenen Ausprägungen genutzt. Insbesondere bei der Lieferung von Speisen ist es wichtig und in der Regel wesentlich, dass die angelieferte Speise frisch und wohltemperiert angeliefert wird.

Dabei werden die Speisen in der Regel mit einer Verpackung ausgeliefert, insbesondere Faltschachteln aus Kartonagen, vorwiegend hergestellt aus Karton, Vollpappe und/oder Wellpappe. Die Ausgestaltung und Auswahl des Materials der Faltschachtel richtet sich dabei nach der beabsichtigten Anwendung der Faltschachtel. Für die Auslieferung von frisch zubereiteten Speisen, beispielsweise Pizza in einem sogenannten Pizzakarton, müssen Faltschachteln neben einer Eignung für Lebensmittel eine hohe mechanische Festigkeit aufweisen, eine thermische Dämmung bzw. Isolation, insbesondere bei gleichzeitiger Feuchtigkeitsregulierung aufweisen, und beispielsweise stapelbar sein.

Der mit der Lieferung von frisch zubereiteten Speisen und/oder Waren bzw. Produkte verbundende Verpackungsmüll ist erheblich. Nach Informationen der Deutschen Umwelthilfe werden alleine in Deutschland pro Jahr etwa 435 Millionen Pizzakartons verbraucht. Das sind etwa 50.000 Tonnen Kartonagen, der in oder neben Mülleimern landet. Recycelt werden gebrauchte Pizzakartons in der Regel nicht, weil diese insbesondere wegen Käse- und Speiseölresten für den Papiermüll ungeeignet sind. Gebrauchte Pizzakartons sind so gesehen quasi als Sondermüll zu betrachten. Die alleine mit Pizzakartons verbundenen Gesamtkosten betragen bei durchschnittlichen Kosten von etwa 0,35 € pro Pizzakarton demnach etwa 150 Millionen Euro pro Jahr.

Bisher erfolgt die Anlieferung von insbesondere frisch zubereiteten Speisen und/oder Waren bzw. Produkten üblicherweise in wärmeisolierenden Behältern, sogenannten Thermoboxen, aus Polystyrol, insbesondere Styropor, Styrodur oder dergleichen Material. Diese Transportboxen weisen in der Regel einen im Wesentlichen quaderförmigen, oben offenen Korpus auf, welcher mit einem entsprechend ausgebildeten abnehmbaren Deckel versehen ist. Teilweise sind derartige Thermoboxen ferner noch in eine Tasche oder dergleichen Tragebehältnis einbringbar, die dem Lieferboten den Transport zum Kunden erleichtern sollen, insbesondere bei Lieferdiensten mit Fahrrädern, Motorrollern oder Motorrädern. Als nächstliegender Stand der Technik offenbart die US 5,630,537 A einen tragbaren Behälter zum Transport von frisch zubereiteten Speisen und/oder Waren bzw. Produkten. Der Behälter umfasst einen im Wesentlichen quaderförmigen Korpus mit einem unteren Boden, einer linken Seitenwand, einer rechten Seitenwand, einer Rückwand und einer vorderen, mit einer Tür versehenen Seite, mit welcher der Behälter verschließbar ist. Optional bzw. bedarfsweise weist der Korpus des Behälters wenigstens eine feste Mittelwand parallel verlaufend zu den Seitenwänden auf. In den Korpus des Behälters ist wenigstens ein schubladenähnlich und oben offen ausgebildeter Einsatz zur Aufnahme von frisch zubereiteten Speisen und/oder Waren bzw. Produkten einsetzbar. Der schubladenähnlich und oben offene Einsatz weist einen Boden, eine linke Seitenwand, eine rechte Seitenwand, eine Vorderwand und eine Rückwand auf. Der Einsatz ist an der vorderen, die Tür aufweisenden Seite des Korpus des Behälters horizontal in den Korpus einschiebbar bzw. vollständig aus dem Korpus ausziehbar.

Insbesondere bei der Auslieferung bei dem Kunden vor Ort werden diese Transportboxen in der Regel von dem Lieferboten des Lieferdienstes vor dessen Bauch getragen und in der Regel über mehrere Etagen zum Kunden bewegt. Zur Betätigung eines Klingel- bzw. Schellentasters an der Haustür und/oder vor der Wohnungstür des zu beliefernden Kunden, wird die Transportbox auf dem Boden abgestellt, wobei der Lieferbote seinen Oberkörper beugen, das heißt sich bücken muss. In der gebeugten Haltung muss der Lieferbote dann den Deckel der Transportbox abnehmen bzw. zumindest anheben und die bestellte Speise aus der Transportbox heben und dem Kunden schließlich übergeben. Oftmals wird der abgenommene Deckel dabei unhygienisch auf dem Boden abgestellt.

Es sind in letzter Zeit auch im Bereich von Essenslieferdiensten wiederverwendbare Umverpackungen angedacht und getestet worden. Es hat sich jedoch gezeigt, dass insbesondere Pfandgebühren und dergleichen viele Kunden von einer Nutzung Abstand nehmen lassen.

Vor diesem Hintergrund liegt der vorliegenden Erfindung die Aufgabe zugrunde, den Transport von frisch zubereiteten Speisen und/oder Waren bzw. Produkten zu verbessern und dabei insbesondere Verpackungsmüll bzw. -abfälle weitestgehend zu vermeiden bzw. deutlich zu reduzieren und die Anlieferung für den Lieferboten ergonomisch zu gestalten.

Zur technischen Lösung dieser Aufgabe wird mit der vorliegenden Erfindung ein tragbarer Behälter zum Transport von frisch zubereiteten Speisen und/oder Waren bzw. Produkten, mit den Merkmalen des Anspruchs 1 vorgeschlagen.

Die erfindungsgemäße Transportbox ermöglich vorteilhafterweise einen Verzicht von Umverpackungen für die zu liefernden frisch zubereiteten Speisen und/oder Waren bzw. Produkte. Erfindungsgemäß kann die Transportbox mit ihren Einsätzen nicht nur zur Auslieferung von flachen Pizzen verwendet werden, sondern es können auch Einsätze für Speisen mit höheren räumlichen Abmessungen, wie Salate, belegte Baguettes, Fleischgerichte mit Kartoffeln und Gemüse, und/oder dergleichen vorgesehen und in den Korpus der Transportbox eingesetzt werden.

Die erfindungsgemäße Transportbox ermöglicht besonders vorteilhaft eine Auslieferung von frisch zubereiteten Speisen und/oder Waren bzw. Produkten bei Vermeidung einer Verpackung, insbesondere einer Faltschachtel oder dergleichen, für diese. Frisch zubereitete Speisen und/oder Waren sind erfindungsgemäß vorteilhafterweise direkt auf einen Teller des zu beliefernden Kunden auslieferbar. Die einzelnen schubladenähnlichen Einsäte der erfindungsgemäßen Transportbox nehmen dabei die auszuliefernden Speisen während des Transports auf. Beim zu beliefernden Kunden vor Ort werden die bestellten Speisen dann von dem jeweiligen Einsatz der Transportbox durch Herausziehen des Einsatzes aus dem Korpus der Transportbox von dem Einsatz direkt auf einen Teller des Kunden verbracht. Vorteilhafterweise sind die schubladenähnlichen Einsätze dazu an der der Vorderwand gegenüberliegenden Seite (Rückseite) ohne Rückwand ausgebildet, die ein Rutschen bzw. Gleiten der Speise vom Boden des Einsatzes auf den Teller des Kunden ermöglicht. Eine Verpackung für die zu liefernden Speisen kann insofern vorteilhafterweise entfallen. Vorteilhafterweise sind die schubladenähnlichen, dreikantigen Einsätze mit einer Einrichtung oder einem Mechanismus versehen, der jeden einzelnen Einsatz gegen ein unbeabsichtigtes Herausrutschens aus der Transportbox sichert, beispielsweise mittels Magneten oder dergleichen.

Vorteilhafterweise weisen die linke Seitenwand und die rechte Seitenwand des Einsatzes jeweils einen Längssteg auf, mittels welcher der Einsatz in seitens der linken Seitenwand und der rechten Seitenwand des Korpus, in seitens der linken Seitenwand und der Mittelwand des Korpus, oder in seitens der rechten Seitenwand und der Mittelwand des Korpus korrespondierend ausgebildeter Längsfugen horizontal in den Korpus einschiebbar bzw. aus dem Korpus ausziehbar ist. Eine alternative Ausgestaltung sieht miteinander korrespondierend zusammenwirkende Auszugsschienen seitens des wenigstens einen schubladenähnlichen Einsatzes und seitens des Korpus der Transportbox vor.

Gemäß einer weiteren vorteilhaften Ausgestaltung der Erfindung ist der untere Boden des Korpus mit wenigstens einem vertikal zum Grund absenkbaren, vorzugsweise höhen- bzw. längenverstellbaren Stützbein versehen, wobei vorzugsweise eine Höhen- bzw. Längenverstellung von bis zu 500mm, vorgesehen bzw. ermöglicht ist, besonders bevorzugt stufenlos. Durch das erfindungsgemäß vorgesehene Stützbein wird es dem Lieferboten ermöglicht die Transportbox auf dem Boden abzustellen und die zu leifernden Speisen aus der Transportbox zu entnehmen, ohne dass sich der Lieferbote dazu zum Boden bücken muss. Das wenigstens eine Stützbein ist vorteilhafterweise integriertes Bestandteil der Transportbox und kann vorteilhafterweise einfach aus- und eingefahren sowie in der Höhe eingestellt bzw. verstellt werden. Vorteilhafterweise genügt die Betätigung eines kleinen Handgriffs und das Stützbein fährt aus. Die Transportbox steht nun fest auf dem Boden, die Last muss vom Lieferboten nicht mehr getragen werden. Der Lieferbote hat dann beide Hände frei, beispielsweise zur Betätigung eines Schellen- bzw. Klingeltasters. Vorteilhafterweise kann die Transportbox dabei als Tisch zum abstellen der vom Kunden bereitgestellten Teller dienen. Gemäß einer weiteren vorteilhaften Ausgestaltung der Erfindung ist der obere Boden des Korpus als Tischfläche nutzbar ist, insbesondere im abgesenkten Zustand des wenigstens einen Stützbeins. Vorteilhafterweise ist der obere Boden des Korpus mit einer rutschfesten Oberfläche ausgebildet oder versehen bzw. versehbar. In diesem Zustand kann der Inhalt der schubladenähnlichen Einsätze von diesen direkt auf den oder die Teller des Kunden verbracht werden, voreilhafterweise Teller für Teller. Bei Bedarf und/oder Wunsch kann das Verbringen der Inhalte der schubladenähnlichen Einsätze auf den oder die Teller auch vom Kunden selber vorgenommen werden, was insbesondere die hygienische Gesamtbilanz noch einmal erhöht.

Vorteilhafterweise weist die Vorderwand des Einsatzes einen Griff zum Einschieben des Einsatzes in den Korpus bzw. zum Herausziehen des Einsatzes aus dem Korpus sowie zum Handhaben des vollständig aus dem Korpus herausgezogenen Einsatzes auf. Vorteilhafterweise ist der Griff integriert seitens der Vorderwand ausgebildet, vorzugsweise als Griffmulde. Vorteilhafterweise ragt der Griff so nicht über die Vorderwand des Einsatzes hinaus. Der Griff kann beispielsweise in der Vorderwand des Einsatzes durch Ausfräsung ausgebildet sein. Ferner kann vorgesehen sein, dass in einer Ausfräsung in der Vorderwand des Einsatzes eine Griffmulde befestigt ist, insbesondere eingeklebt ist. Der Griff ist vorteilhafterweise derart ausgebildet, dass ein stabiles und sicheres Herausziehen als auch Handhaben des Einsatzes gewährleistet ist, so dass insbesondere beim Verbringen der frisch zubereiteten Speisen und/oder Waren bzw. Produkte vom Einsatz auf einen Teller des Kunden ein Herunterfallen oder Rausrutschen der frisch zubereiteten Speisen und/oder Waren bzw. Produkte vermeidbar ist.

Eine weitere vorteilhafte Ausgestaltung der Erfindung sieht Entlüftungsöffnungen und/oder Entlüftungskanäle seitens des Korpus und/oder des wenigstens einen Einsatzes vor. Durch frisch zubereiteten Speisen und/oder Waren bzw. Produkte kann mitunter Kondenswasser entstehen, welches über die Entlüftungsöffnungen und/oder Entlüftungskanäle abführbar ist. So bleiben die Speisen und/oder Waren bzw. Produkte länger wohl temperiert und sind frischer. Eine weitere vorteilhafte Ausgestaltung der Erfindung sieht vor, dass die Transportbox nach Gebrauch bzw. erfolgter Auslieferung von frisch zubereiteten Speisen und/oder Waren bzw. Produkten gereinigt wird. Dazu wird die Transportbox vorteilhafterweise mit Wasser, vorzugsweise heißem Wasser, ausgespritzt und anschließend mit Heißluft getrocknet. Nach dem Trocknen ist die Transportbox vorteilhafterwiese vortemperiert. Vorteilhafterweise kann bei entsprechend vortemperierter Transportbox auch kein bzw. wesentlich weniger Kondenswasser durch Speisen entstehen und die Speisen bleiben länger wohltemperiert bzw. heißer als in einer üblichen Umverpackung wie beispielsweise einem Pappkarton. Vorteilhafterweise ist eine Vortemperierung der Transportbox vor dem Bestücken der Einsätze mit frisch zubereiteten Speisen und/oder Waren bzw. Produkten vorgesehen.

Vorteilhafterweise weisen die linke Seitenwand des Korpus und die rechte Seitenwand des Korpus jeweils einen Griff zum Tragen des Behälters auf. Vorteilhafterweise sind die Griffe integriert seitens der Seitenwände des Korpus ausgebildet, vorzugsweise als Griffmulde. Vorteilhafterweise ragen die Griffe so nicht über die Seitenwände des Korpus hinaus.

Gemäß einer weiteren vorteilhaften Ausgestaltung der Erfindung sind an der linken Seitenwand des Korpus, der rechten Seitenwand des Korpus und/oder an der Rückwand des Korpus verstellbare Traggurte bzw. Trageriemen zum Tragen des Behälters befestigt bzw. befestigbar, die es einer Person erlauben, den Behälter nach Art eines Rucksacks auf dem Rücken oder vor dem Körper zu tragen, vorzugsweise mit Schultergurten bzw. Schulterriemen, optional bzw. bedarfsweise mit Hüftgurt bzw. Hüftriemen. Vorteilhafterweise sind die Traggurte bzw. Trageriemen lösbar befestigbar, vorzugsweise mittels einer formschlüssigen Verbindung durch das Ineinandergreifen der Verbindungspartner seitens der Traggurte bzw. Trageriemen und des Korpus, und/oder mittels Magneten bzw. magnetischer Verbindung zwischen den Traggurten bzw. Trageriemen und dem Korpus. Eine weitere vorteilhafte Ausgestaltung der Erfindung sieht vor, dass die Transportbox mit den Traggurten verbindbar ist, vorzugsweise mittels Einklinken oder Einhängen der Transportbox an die Traggurte. Der mit den Traggurten versehene Bote kann die Transportbox dann einfach an die Traggurte anhängen oder einklinken und seinen Liefergang starten.

In einer weiteren vorteilhaften Ausgestaltung der Erfindung ist der Korpus der erfindungsgemäßen Transportbox mit Aufhängeösen versehen, die es dem Träger ermöglichen, die Transportbox mit einem Umhängegurt ergonomisch zu tragen, vor dem Körper oder auf dem Rücken. Diese Aufhängeösen sind vorteilhafterweise so ausgestaltet, dass sie sicher die Last tragen können und vorteilhafterweise schnell einrastbar oder ausrastbar sind, beispielsweise um die erfindungsgemäße Transportbox aus dem Kofferraum eines Fahrzeuges zu heben oder dort abzustellen. Ergänzend haben sich hier Magnetverschlüsse vorteilhaft bewährt.

Gemäß einer weiteren vorteilhaften Ausgestaltung der Erfindung sind der Korpus bzw. der untere Boden des Korpus, die linke Seitenwand des Korpus, die rechte Seitenwand des Korpus, die Rückwand des Korpus und der obere Boden des Korpus, sowie die optionale Mittelwand des Korpus und der Einsatz bzw. der Boden des Einsatzes, die linke Seitenwand des Einsatzes, die rechte Seitenwand des Einsatzes und die Vorderwand des Einsatzes aus Blech, vorzugsweise Feinblech, gefertigt, vorzugsweise aus Blechen aus Aluminium oder einer Aluminiumlegierung, besonders bevorzugt mit einer Stärke in einem Bereich von 0,8 mm bis 3,0 mm, vorzugsweise 1 mm.

Vorteilhafterweise sind Essensreste auf den schubladenähnlichen, dreikantigen Einsätzen mittels Spülprozess hygienisch abreinigbar, bevor diese wieder zum Einsatz kommen. Gleiches gilt für den Korpus der Transportbox bzw. die entsprechenden Aufnahmebereiche bzw. Kammern für die Einsätze seitens des Korpus. Letztere sind vorteilhafterweise ebenso einfach zu reinigen wie die Einsätze. Die Aufnahmebereiche bzw. Kammern für jeden der Einsätze der Transportbox sind vorteilhafterweise wärmeisolierend und zeitgleich entlüftend ausgeführt, so dass insbesondere heiße Speisen heiß und knusprig und kalte Speisen oder Getränke kühl bleiben.

Gemäß einer weitere, vorteilhaften Ausgestaltung der Erfindung sind der untere Boden des Korpus, die linke Seitenwand des Korpus, die rechte Seitenwand des Korpus, die Rückwand des Korpus und der obere Boden des Korpus, vorzugsweise auch die optionale Mittelwand des Korpus, und der Boden des Einsatzes, die linke Seitenwand des Einsatzes, die rechte Seitenwand des Einsatzes und die Vorderwand des Einsatzes auf Ihren äußeren Seiten mit einem wärmeisolierendem Material versehen, vorzugsweise mit extrudiertem Polystyrol (XPS-Hartschaum), insbesondere Styrodur der BASF oder dergleichen, besonders bevorzugt mit einer Stärke in einem Bereich von 10 mm bis 50 mm, vorzugsweise 15 mm.

Eine weitere vorteilhafte Ausgestaltung der Erfindung sieht vor, dass der Korpus aus einem inneren Korpuselement aus Blech, vorzugsweise Feinblech, und aus einem äußeren Korpuselement aus extrudiertem Polystyrol (XPS-Hartschaum), insbesondere Styrodur der BASF oder dergleichen, gefertigt ist, wobei das innere Korpuselement in das äußere Korpuselement eingesetzt und mit diesem fest verbunden ist, vorzugsweise mittels Verklebung. Bevorzugt sind auch hier Bleche aus Aluminium oder einer Aluminiumlegierung, besonders bevorzugt mit einer Stärke in einem Bereich von 0,8 mm bis 3,0 mm, vorzugsweise 1 mm.

Eine weitere vorteilhafte Ausgestaltung der Erfindung sieht vor, dass der Einsatz aus einem inneren Einsatzelement aus Blech, vorzugsweise Feinblech, und aus einem äußeren Einsatzelement aus extrudiertem Polystyrol (XPS-Hartschaum), insbesondere Styrodur der BASF oder dergleichen, gefertigt ist, wobei das innere Einsatzelement in das äußere Einsatzelement eingesetzt und mit diesem fest verbunden ist, vorzugsweise mittels Verklebung. Bevorzugt sind auch hier Bleche aus Aluminium oder einer Aluminiumlegierung, besonders bevorzugt mit einer Stärke in einem Bereich von 0,8 mm bis 3,0 mm, vorzugsweise 1 mm.

Eine weitere vorteilhafte Ausgestaltung der Erfindung sieht vor, dass der Einsatz aus einem inneren Einsatzelement aus Blech, vorzugsweise Feinblech, und aus einem äußeren Einsatzelement aus extrudiertem Polystyrol (XPS-Hartschaum), insbesondere Styrodur der BASF oder dergleichen, gefertigt ist, wobei das innere Einsatzelement in das äußere Einsatzelement eingesetzt und mit diesem fest verbunden ist, vorzugsweise mittels Verklebung. Bevorzugt sind auch hier Bleche aus Aluminium oder einer Aluminiumlegierung, besonders bevorzugt mit einer Stärke in einem Bereich von 0,8 mm bis 3,0 mm, vorzugsweise 1 mm.

Eine weitere vorteilhafte Ausgestaltung der Erfindung sieht vor, dass das äußere Korpuselement des Korpus der Transportbox aus einem extrudiertem Polystyrol (XPS-Hartschaum), insbesondere Styrodur der BASF oder dergleichen, gefertigt ist und mit wenigstens einem vertikal zum Grund absenkbaren, vorzugsweise höhen- bzw. längenverstellbaren Stützbein und mit verstellbaren Traggurten bzw. Trageriemen zum Tragen des Behälters gefertigt ist. Das innere Korpuselement des Korpus ist dabei vorteilhafterweise separat aus Blech aus Aluminium oder einer Aluminiumlegierung gefertigt und vorteilhafterweise lösbar in das äußere Korpuselement aus XPS-Hartschaum einsetzbar. Dadurch kann das innere Korpuselement des Korpus von dem äußeren Korpuselement des Korpus getrennt werden. Die schubladenähnlichen Einsätze sind vorteilhafterweise aus einem äußeren Einsatzelement aus extrudiertem Polystyrol (XPS-Hartschaum), insbesondere Styrodur der BASF oder dergleichen, mit jeweils einem Längssteg seitens der linken Seitenwand und seitens der rechten Seitenwand des äußeren Einsatzelements des Einsatzes, gefertigt. Das innere Einsatzelement des Einsatzes ist dabei vorteilhafterweise separat aus Blech aus Aluminium oder einer Aluminiumlegierung gefertigt und vorteilhafterweise lösbar in das äußere Einsatzelement aus XPS-Hartschaum einsetzbar. Dadurch kann das innere Einsatzelement des Einsatzes von dem äußeren Einsatzelement des Einsatzes getrennt werden. Vorteilhafterweise sind so insbesondere das innere Korpuselement und das innere Einsatzelement einfach herausnehmbar und reinigbar.

Eine weitere vorteilhafte Ausgestaltung der Erfindung ist dadurch gekennzeichnet, dass der Korpus mit Einsätzen unterschiedlicher Abmessungen versehen bzw. versehbar ist.

Vorteilhafterweise weist der Korpus äußere Abmessungen mit einer Breite in einem im Bereich von 570 mm bis 700 mm, vorzugsweise 645 mm, mit einer Höhe in einem im Bereich von 350 mm bis 500 mm, vorzugsweise 420 mm, und mit einer Tiefe in einem im Bereich von 280 mm bis 400 mm, vorzugsweise 384 mm, auf.

Ein erfindungsgemäßer tragbarer Behälter ist vorteilhafterweise für Essenslieferservice, insbesondere Lieferdienste von vorverarbeiteten oder vorgekochten Lebensmitteln verwendbar.

Eine weitere vorteilhafte Ausgestaltung der Erfindung sieht vor, dass der Korpus, vorzugsweise die linke Seitenwand, die rechte Seitenwand, die Rückwand und/oder der obere Boden des Korpus der Transportbox, auf den nach außen weisenden Flächen als Werbeflächen nutzbar sind. Vorteilhafterweise sind für Werbeflächen seitens des Korpus, vorzugsweise seitens der linken Seitenwand, die rechten Seitenwand, der Rückwand und/oder dem oberen Boden des Korpus der Transportbox auf den nach außen weisenden Flächen Aufnahmetaschen oder Halterungen zur Aufnahme bzw. Befestigung von flächigen Werbemitteln vorgesehen. Entsprechend kann vorteilhafterweise auch die Vorderwand eines schubladenähnlichen Einsatzes der Transportbox als Werbefläche genutzt werden, vorzugsweise mit Aufnahmetaschen oder Halterungen zur Aufnahme bzw. Befestigung von flächigen Werbemitteln.

Weitere Einzelheiten, Merkmale und/oder Vorteile der vorliegenden Erfindung werden nachfolgend anhand des in den Figuren der Zeichnung dargestellten Ausführungsbeispiels näher erläutert. Dabei zeigt:
- Fig. 1: in einer schematisch perspektivischen Ansicht ein prinzipielles Ausführungsbeispiel einer erfindungsgemäßen Transportbox;
- Fig. 2: in einer schematisch perspektivischen Ansicht ein prinzipielles Ausführungsbeispiel einer erfindungsgemäßen Transportbox nach Fig. 1 ohne schubladenähnliche Einsätze;
- Fig. 3: in einer schematisch perspektivischen Explosionsdarstellung ein prinzipielles Ausführungsbeispiel des Korpus einer erfindungsgemäßen Transportbox;
- Fig. 4: in einer schematisch perspektivischen Ansicht ein prinzipielles Ausführungsbeispiel eines schubladenähnlichen Einsatzes einer erfindungsgemäßen Transportbox;
- Fig. 5: in einer schematisch perspektivischen Ansicht ein weiteres prinzipielles Ausführungsbeispiel eines schubladenähnlichen Einsatzes einer erfindungsgemäßen Transportbox;
- Fig. 6: in einer schematisch perspektivischen Ansicht ein prinzipielles Ausführungsbeispiel eines Stützbeins einer erfindungsgemäßen Transportbox; und
- Fig. 7: in einer schematisch perspektivischen Ansicht ein prinzipielles Ausführungsbeispiel für Traggurte bzw. Trageriemen einer erfindungsgemäßen Transportbox.

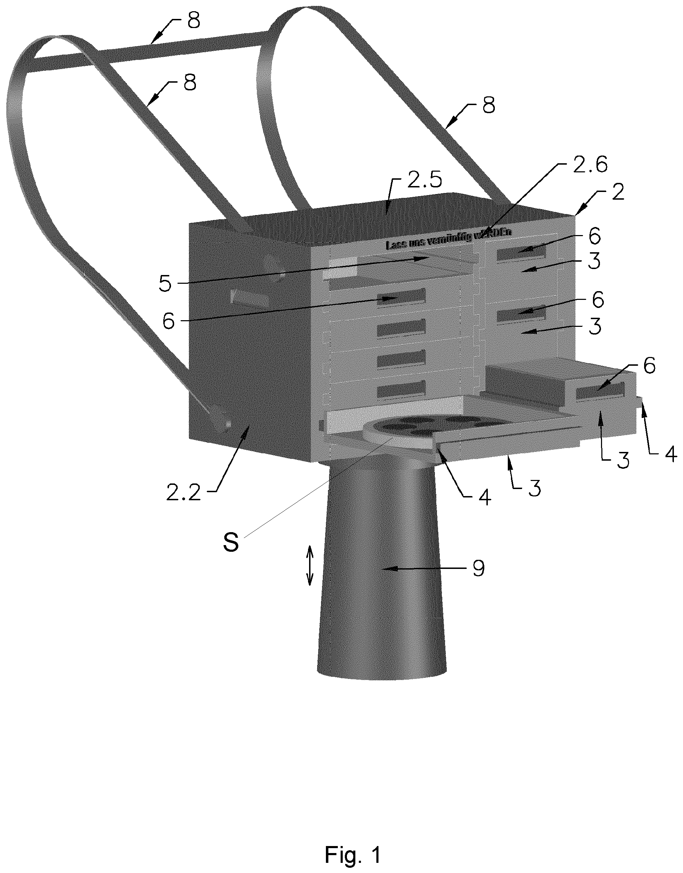

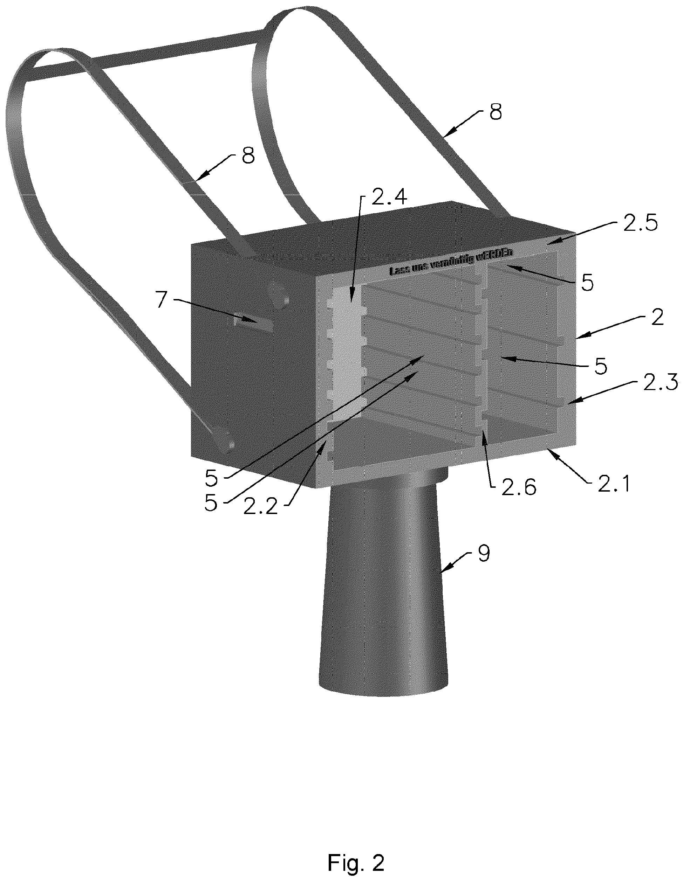

Fig. 1 und Fig. 2 zeigen jeweils in einer schematischen Ansicht ein prinzipielles Ausführungsbeispiel einer erfindungsgemäßen Transportbox 1 zum Transport von frisch zubereiteten Speisen S und/oder Waren bzw. Produkten, vorliegend beispielhaft einer Pizza S. Fig. 1 zeigt die Transportbox 1 mit Einsätzen 3. Fig. 2 zeigt die Transportbox 1 ohne Einsätze 3.

Die Transportbox 1 ist als tragbarer Behälter 1 ausgebildet und umfasst einen im Wesentlichen quaderförmigen, an einer vorderen Seite 2.0 offenen Korpus 2 und vorliegend bis zu neun schubladenähnliche Einsätze 3, welche jeweils an der vorderen Seite 2.0 des Korpus 2 horizontal in den Korpus 2 einschiebbar bzw. vollständig aus dem Korpus 2 herausziehbar sind.

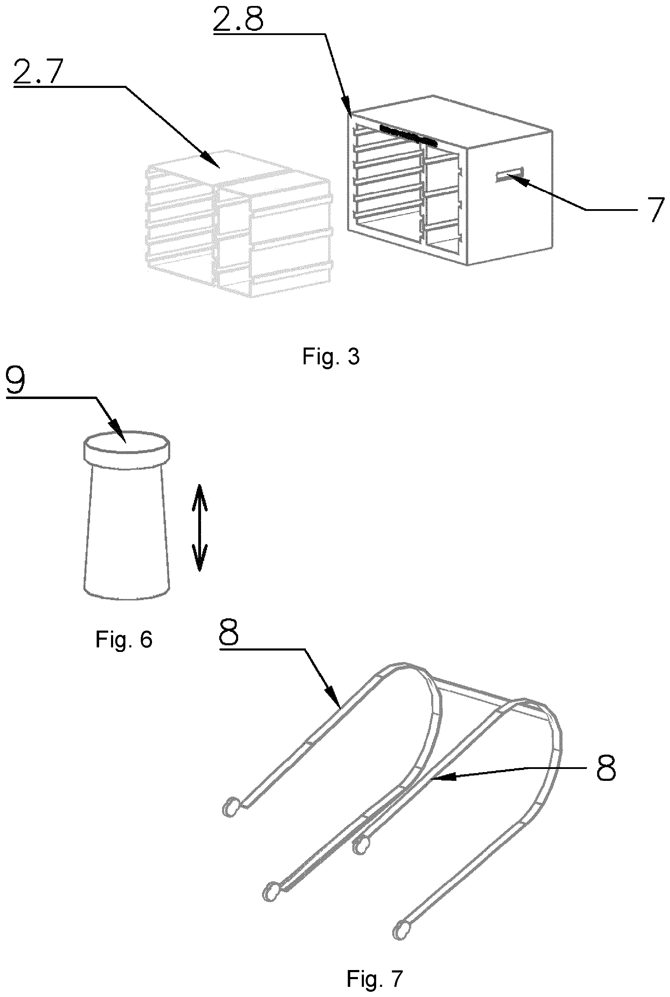

Der Korpus 2 weist einen unteren Boden 2.1, eine linken Seitenwand 2.2, eine rechten Seitenwand 2.3, eine Rückwand 2.4, einen oberen Boden 2.5und eine feste Mittelwand 2.6, parallel verlaufend zu den Seitenwänden 2.2 und 2.3, auf. Die linke Seitenwand 2.2 und die rechte Seitenwand 2.3 des Korpus 2 weisen jeweils einen Griff 7 zum Tragen der Transportbox 1 auf. Der Griff 7 ist vorliegend jeweils als Griffmulde seitens der linken Seitenwand 2.2 und seitens der rechten Seitenwand 2.3 ausgebildet. Um das Tragen der Transportbox 1 weiter zu vereinfachen, sind vorliegend an der linken Seitenwand 2.2 und der rechten Seitenwand 2.3 des Korpus 2 verstellbare, insbesondere in der Länge verstellbare Traggurte bzw. Trageriemen 8 befestigt bzw. befestigbar (vgl. auch Fig. 7). Die vorliegend Schulter- und Brustgurte bzw. -riemen umfassenden Traggurte bzw. Trageriemen 8 erlauben bzw. ermöglichen es einer Person, die Transportbox 1 insbesondere nach Art eines Rucksacks auf dem Rücken oder vor dem Körper zu tragen. Die Traggurte bzw. Trageriemen 8 sind lösbar an dem Korpus 2 befestigbar, vorliegend mittels hier nicht explizit dargestellter Magneten bzw. magnetischer Verbindung zwischen den Traggurten bzw. Trageriemen 8 und dem Korpus 2.

Die schubladenähnlichen Einsätze 3 sind an einer hinteren Seite 3.0 und oben offenen ausgestaltet und zur Aufnahme von frisch zubereiteten Speisen S und/oder Waren bzw. Produkten ausgebildet. Jeder schubladenähnlicher Einsatz 3 weist einen unteren Boden 3.1, eine linke Seitenwand 3.2, eine rechte Seitenwand 3,3 und eine Vorderwand 3.4 auf. Die linke Seitenwand 3.2 und die rechte Seitenwand 3.3 der jeweiligen Einsätze 3 der Transportbox 1 weisen jeweils einen Längssteg 4 auf, mittels welcher der jeweilige Einsatz 3 in jeweils seitens der linken Seitenwand 2.2 und der rechten Seitenwand 2.3 des Korpus 2, in seitens der linken Seitenwand 2.2 und der Mittelwand 2.6 des Korpus 2, oder in seitens der rechten Seitenwand 2.3 und der Mittelwand 2.6 des Korpus 2 korrespondierend ausgebildete Längsfugen 5 horizontal in den Korpus 2 einschiebbar bzw. aus dem Korpus 2 ausziehbar ist. Die Vorderwand 3.4 der jeweiligen Einsätze 3 ist jeweils mit einem Griff 6 zum Einschieben des Einsatzes 3 in den Korpus 2 der Transportbox 1 bzw. zum Herausziehen des Einsatzes 3 aus dem Korpus 2 der Transportbox 1 sowie zum Handhaben des vollständig aus dem Korpus 2 herausgezogenen Einsatzes 3 versehen. Der Griff 6 ist vorliegend jeweils als Griffmulde seitens der Vorderwand 3.4 ausgebildet.

Wenn sämtliche der schubladenähnlichen Einsätze 3 der Transportbox 1 in den Korpus 2 der Transportbox 1 eingesetzt und vollständig eingeschoben sind, ist die vordere Seite 2.0 des Korpus 2 der Transportbox 1 mittels der Vorderwände 3.4 der Einsätze 3 der Transportbox 1 verschlossen. Die Ausgestaltung der schubladenähnlichen Einsatze 3 der Transportbox 1 sind bei dem Ausführungsbeispiel nach Fig. 1 derart ausgewählt, dass zwei der in Fig. 1 links dargestellten schubladenähnlichen Einsätze 3 die gleiche Höhe aufweisen wie ein in Fig. 1 rechts dargestellter schubladenähnlicher Einsatz 3. Dementsprechend sind bei dem Ausführungsbeispiel einer erfindungsgemäßen Transportbox 1 nach Fig. 1 auf der linken Seite sechs schubladenähnliche Einsätze 3 und auf der rechten Seite drei schubladenähnliche Einsätze 3 aufnehmbar. Ein in den Korpus 2 der Transportbox 1 eingesetzter und vollständig eingeschobener schubladenähnlicher Einsatz 3 stellt dabei einen Aufnahmebereich bzw. eine Kammer zur Aufnahme von Speisen S und/oder Waren bzw. Produkten bereit. Die schubladenähnlichen Einsätze 3 der Transportbox 1 sind mit einer hier nicht dargestellten Einrichtung bzw. Mechanismus versehen, der jeden einzelnen Einsatz 3 gegen ein unbeabsichtigtes Herausrutschens aus der Transportbox sichert, insbesondere mittels Magneten bzw. magnetischer Verbindung zwischen Einsatz 3 und Korpus 2 der Transportbox 1.

Der Korpus 2 der Transortbox 1 ist, wie insbesondere in Fig. 3 dargestellt, aus einem inneren Korpuselement 2.7 aus Blech und aus einem äußeren Korpuselement 2.8 aus extrudiertem Polystyrol (XPS-Hartschaum), vorliegend Styrodur der BASF, gefertigt. Dabei ist das innere Korpuselement 2.7 in das äußere Korpuselement 2.8 eingesetzt und mit diesem fest verbunden, vorliegend mittels Verklebung. Die Rückwand 2.4 des äußeren Korpuselements 2.8, bei Bedarf auch des inneren Korpuselements 2.7, ist dabei separat angebracht. Bei dem inneren Korpuselement 2.7 des Korpus 2 ist bzw. sind der untere Boden 2.1, die linke Seitenwand 2.2, die rechte Seitenwand 2.3, die Rückwand 2.4, der obere Boden 2.5 sowie die Mittelwand 2.6 vorliegend aus Blechen bzw. Feinblechen aus Aluminium oder einer Aluminiumlegierung gefertigt, vorliegend mit einer Stärke von etwa 1 mm. Bei dem äußeren Korpuselement 2.8 des Korpus 2 der Transportbox 1 sind der untere Boden 2.1, die linke Seitenwand 2.2, die rechte Seitenwand 2.3, die Rückwand 2.4, der obere Boden 2.5 sowie die Mittelwand 2.6 aus einem wärmeisolierendem Material, vorliegend mit extrudiertem Polystyrol (XPS-Hartschaum), insbesondere Styrodur der BASF, gefertigt, vorliegend mit einer Stärke von etwa 15 mm.

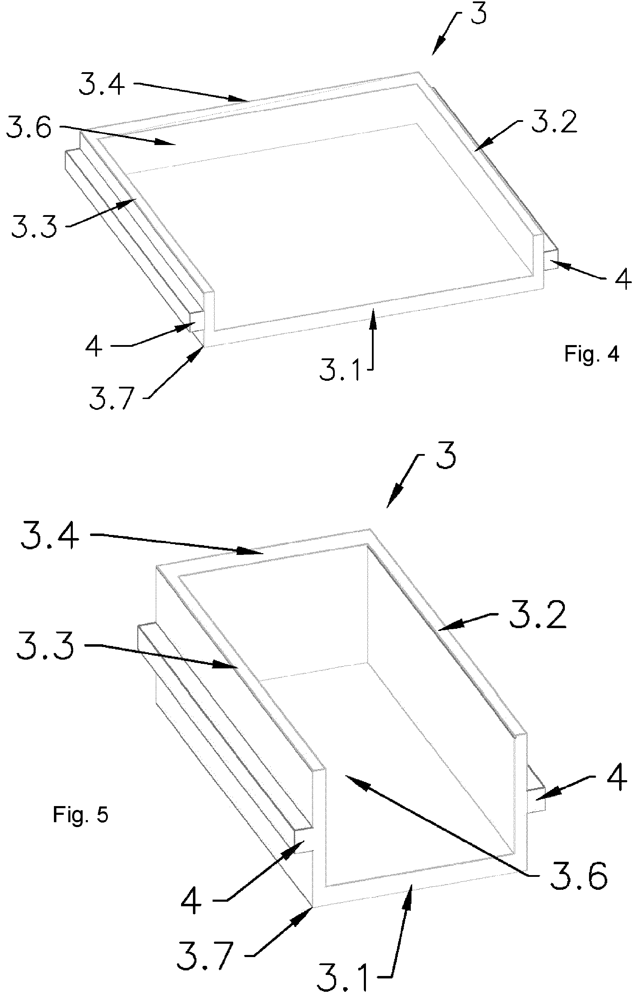

Die schubladenähnlichen Einsätze 3 der Transportbox 1 sind, wie insbesondere anhand von Fig. 4 und Fig. 5 erkennbar, jeweils aus einem inneren Einsatzelement 3.5 aus Blech und aus einem äußeren Einsatzelement 3.6 aus extrudiertem Polystyrol (XPS-Hartschaum), vorliegend Styrodur der BASF, gefertigt. Dabei ist das innere Einsatzelement 3.5 in das äußere Einsatzelement 3.6 eingesetzt und mit diesem fest verbunden ist, vorliegend mittels Verklebung. Bei dem inneren Einsatzelement 3.5 des Einsatzes 3 ist bzw. sind der untere Boden 3.1, die linke Seitenwand 3.2, die rechte Seitenwand 3,3 und die Vorderwand 3.4 vorliegend aus Blechen bzw. Feinblechen aus Aluminium oder einer Aluminiumlegierung gefertigt, vorliegend mit einer Stärke von etwa 1 mm. Bei dem äußeren Einsatzelement 2.6 des Einsatzes 3 der Transportbox 1 sind der untere Boden 3.1, die linke Seitenwand 3.2, die rechte Seitenwand 3,3 und die Vorderwand 3.4 aus einem wärmeisolierendem Material, vorliegend mit extrudiertem Polystyrol (XPS-Hartschaum), insbesondere Styrodur der BASF, gefertigt, vorliegend mit einer Stärke von etwa 15 mm.

Die vom Korpus 2 und einem Einsatz 3 der Transportbox 1 gebildeten Aufnahmebereiche bzw. Kammern für frisch zubereitete Speisen S und/oder Waren bzw. Produkte sind so wärmeisoliert und zeitgleich entlüftend ausgeführt, so dass insbesondere in den Kammern aufgenommene heiße Speisen heiß und knusprig und kalte Speisen oder Getränke kühl bleiben.

Der untere Boden 2.1 des Korpus 2 ist mit einem vertikal zum Grund absenkbaren, vorzugsweise höhen- bzw. längenverstellbaren Stützbein 9 versehen (vgl. auch Fig. 6), welches vorliegend eine insbesondere stufenlose Höhen- bzw. Längenverstellung von bis zu 500mm ermöglicht. Die Verstellbarkeit ist durch den Doppelpfeil neben dem Stützbein verdeutlicht. Die Transportbox 1 ist im abgesenkten Zustand des Stützbeins 9 ist der obere Boden 2.5 des Korpus 2 der Transportbox 1 als Tischfläche nutzbar. Der obere Boden 2.5 des Korpus 2 der Transportbox 1 ist dazu ferner mit einer hier nicht explizit dargestellten rutschfesten Oberfläche ausgebildet oder versehen bzw. versehbar.

Die Transportbox 1 ermöglicht insbesondere eine Auslieferung von frisch zubereiteten Speisen S und/oder Waren bzw. Produkten bei Vermeidung einer Verpackung, insbesondere einer Faltschachtel oder dergleichen, für die Speisen S und/oder Waren bzw. Produkten. Frisch zubereitete Speisen und/oder Waren sind direkt auf einen Teller des zu beliefernden Kunden auslieferbar. Die einzelnen schubladenähnlichen Einsäte 3 der Transportbox 1 nehmen dabei die auszuliefernden Speisen S während des Transports auf. Beim zu beliefernden Kunden vor Ort werden die bestellten Speisen S dann von dem jeweiligen Einsatz 3 der Transportbox 1 durch Herausziehen des Einsatzes 3 aus dem Korpus 2 der Transportbox 1 von dem Einsatz 3 direkt auf einen Teller des Kunden verbracht. Da die schubladenähnlichen Einsätze 3 an der der Vorderwand 3.4 gegenüberliegenden Seite (Rückseite) ohne Rückwand ausgebildet sind, ist ein Rutschen bzw. Gleiten der Speise vom Boden 3.1 des Einsatzes 3 auf den Teller des Kunden ermöglicht. Eine Verpackung für die zu liefernden Speisen S kann insofern entfallen.

Dadurch, dass der untere Boden 2.1 des Korpus 2 mit wenigstens einem vertikal zum Grund absenkbaren, vorzugsweise höhen- bzw. längenverstellbaren Stützbein 9 versehen ist, wird es dem Lieferboten ermöglicht die Transportbox 1 auf dem Boden abzustellen und die zu liefernden Speisen S aus der Transportbox 1 zu entnehmen, ohne dass sich der Lieferbote dazu zum Boden bücken muss. Vorteilhafterweise genügt die Betätigung eines kleinen, hier nicht explizit dargestellten Handgriffs und das Stützbein 9 fährt in Richtung Boden bzw. Untergrund aus. Die Transportbox 1 steht nun fest auf dem Boden bzw. Untergrund und die Last (Transportbox mit frisch zubereiteten Speisen und/oder Waren bzw. Produkten) muss vom Lieferboten nicht mehr getragen werden. Der Lieferbote hat dann beide Hände frei, beispielsweise zur Betätigung eines Schellen- bzw. Klingeltasters. Der obere Boden 2.5 des Korpus 2 der Transportbox 1 kann als Tisch zum Abstellen der vom Kunden bereitgestellten Teller dienen und ist als Tischfläche nutzbar insbesondere mit einer rutschfesten Oberfläche. In diesem Zustand kann der Inhalt (frisch zubereitete Speisen und/oder Waren bzw. Produkte) der schubladenähnlichen Einsätze 3 von diesen direkt auf den oder die Teller des Kunden verbracht werden, beispielsweise Teller für Teller. Bei Bedarf und/oder Wunsch kann das Verbringen der Inhalte (frisch zubereitete Speisen und/oder Waren bzw. Produkte) der schubladenähnlichen Einsätze 3 auf den oder die Teller auch vom Kunden selber vorgenommen werden, was insbesondere die hygienische Gesamtbilanz noch einmal erhöht.

Das in den Figuren der Zeichnung dargestellte Ausführungsbeispiel der Erfindung und die im Zusammenhang mit diesem Ausführungsbeispiel der Erfindung beschriebenen Ausführungsbeispiele der Erfindung dienen lediglich der Erläuterung der Erfindung und sind für die Erfindung nicht beschränkend.

### Bezugszeichenliste:

- 1: tragbarer Behälter/Transportbox
- 2: Korpus
- 2.0: vordere/offene Seite (Korpus (2))
- 2.1: unterer Boden (Korpus (2))
- 2.2: linke Seitenwand (Korpus (2))
- 2.3: rechte Seitenwand (Korpus (2))
- 2.4: Rückwand (Korpus (2))
- 2.5: oberer Boden (Korpus (2))
- 2.6: Mittelwand (Korpus (2))
- 2.7: inneres Korpuselement (Korpus (2))
- 2.8: äußeres Korpuselement (Korpus (2))
- 3: schubladenähnlicher Einsatz
- 3.0: hintere Seite (Einsatz (3))
- 3.1: Boden (Einsatz (3))
- 3.2: linke Seitenwand (Einsatz (3))
- 3.3: rechte Seitenwand (Einsatz (3))
- 3.4: Vorderwand (Einsatz (3))
- 3.5: inneres Einsatzelement (Einsatz (3))
- 3.6: äußeres Einsatzelement (Einsatz (3))
- 4: Längssteg (Einsatz (3))
- 5: Längsfuge (Korpus (2))
- 6: Griff (Einsatz (3))
- 7: Griff (Korpus (2))
- 8: Traggurt/Tragriemen
- 9: absenkbares, höhen- bzw. längenverstellbares Stützbein
- S: frisch zubereiteten Speisen und/oder Waren bzw. Produkten, z.B. Pizza

## Patentansprüche

1. Tragbarer Behälter (1) zum Transport von frisch zubereiteten Speisen und/oder Waren bzw. Produkten,
umfassend
einen im Wesentlichen quaderförmigen, an einer vorderen Seite offenen Korpus (2),
mit
einem unteren Boden (2.1), einer linken Seitenwand (2.2), einer rechten Seitenwand (2.3), einer Rückwand (2.4) und einem oberem Boden (2.5), optional bzw. bedarfsweise mit wenigstens einer vorzugsweise festen Mittelwand (2.6) parallel verlaufend zu den Seitenwänden (2.2, 2.3)
und
wenigstens einen Einsatz (3) zur Aufnahme von frisch zubereiteten Speisen und/oder Waren bzw. Produkten,
mit
einem unteren Boden (3.1), einer linken Seitenwand (3.2), einer rechten Seitenwand (3,3) und einer Vorderwand (3.4),
wobei der Einsatz (3) oben, gegenüberliegend dem Boden (3.1) offen ist und an der vorderen Seite des Korpus (2) horizontal in den Korpus (2) einschiebbar bzw. vollständig aus dem Korpus (2) ausziehbar ist, **dadurch gekennzeichnet, dass** der Einsatz an einer hinteren, der Vorderwand (3.4) gegenüberliegenden Seite offen ist.

2. Behälter (1) nach Anspruch 1, wobei die linke Seitenwand (3.2) und die rechte Seitenwand (3.3) des Einsatzes (3) jeweils einen Längssteg (4) aufweisen, mittels welcher der Einsatz (3) in seitens der linken Seitenwand (2.2) und der rechten Seitenwand (2.3) des Korpus (2), in seitens der linken Seitenwand (2.2) und der Mittelwand (2.6) des Korpus (2), oder in seitens der rechten Seitenwand (2.3) und der Mittelwand (2.6) des Korpus (2) korrespondierend ausgebildeter Längsfugen (5) horizontal in den Korpus (2) einschiebbar bzw. aus dem Korpus (2) ausziehbar ist.

3. Behälter (1) nach Anspruch 1 oder Anspruch 2, wobei der untere Boden (2.1) des Korpus (2) mit wenigstens einem vertikal zum Grund absenkbaren, vorzugsweise höhen- bzw. längenverstellbaren Stützbein (9) versehen ist, wobei vorzugsweise eine Höhen- bzw. Längenverstellung von bis zu 500mm, vorgesehen bzw. ermöglicht ist, besonders bevorzugt stufenlos.

4. Behälter (1) nach einem der Ansprüche 1 bis 3, wobei die Vorderwand (3.4) des Einsatzes (3) einen Griff (6) zum Einschieben des Einsatzes (3) in den Korpus (2) bzw. zum Herausziehen des Einsatzes (3) aus dem Korpus (2) sowie zum Handhaben des vollständig aus dem Korpus (2) herausgezogenen Einsatzes (3) aufweist.

5. Behälter (1) nach einem der Ansprüche 1 bis 4, wobei die linke Seitenwand (2.2) und die rechte Seitenwand (2.3) des Korpus (2) jeweils einen Griff (7) zum Tragen des Behälters (1) aufweisen.

6. Behälter (1) nach einem der Ansprüche 1 bis 5, wobei an der linken Seitenwand (2.2), der rechten Seitenwand (2.3) und/oder an der Rückwand (2.4) des Korpus (2) verstellbare Traggurte bzw. Trageriemen (8) zum Tragen des Behälters (1) befestigt bzw. befestigbar sind, die es einer Person erlauben, den Behälter (1) nach Art eines Rucksacks auf dem Rücken oder vor dem Körper zu tragen, vorzugsweise mit Schultergurten bzw. Schulterriemen, optional bzw. bedarfsweise mit Hüftgurt bzw. Hüftriemen.

7. Behälter (1) nach Anspruch 6, wobei die Traggurte bzw. Trageriemen (8) lösbar befestigbar sind, vorzugsweise mittels einer formschlüssigen Verbindung durch das Ineinandergreifen der Verbindungspartner seitens der Traggurte bzw. Trageriemen (8) und des Korpus (2), und/oder mittels Magneten bzw. magnetischer Verbindung zwischen den Traggurten bzw. Trageriemen (8) und dem Korpus (2).

8. Behälter (1) nach einem der Ansprüche 1 bis 7, wobei der obere Boden (2.5) des Korpus (2) als Tischfläche nutzbar ist, vorzugsweise nach einem der Ansprüche 3 bis 7 im abgesenkten Zustand des wenigstens einen Stützbeins (9).

9. Behälter (1) nach einem der Ansprüche 1 bis 8, wobei der obere Boden (2.5) des Korpus (2) mit einer rutschfesten Oberfläche ausgebildet oder versehen bzw. versehbar ist.

10. Behälter (1) nach einem der Ansprüche 1 bis 9, wobei der Korpus (2) bzw. der untere Boden (2.1), die linke Seitenwand (2.2), die rechte Seitenwand (2.3), die Rückwand (2.4) und der obere Boden (2.5), sowie die optionale Mittelwand (2.6) des Korpus (2) und der Einsatz (3) bzw. der untere Boden (3.1), die linke Seitenwand (3.2), die rechte Seitenwand (3,3) und die Vorderwand (3.4) des Einsatzes (3) aus Blech, vorzugsweise Feinblech, gefertigt sind, vorzugsweise aus Blechen aus Aluminium oder einer Aluminiumlegierung, besonders bevorzugt mit einer Stärke in einem Bereich von 0,8 mm bis 3,0 mm, vorzugsweise 1 mm.

11. Behälter (1) nach Anspruch 10, wobei der untere Boden (2.1), die linke Seitenwand (2.2), die rechte Seitenwand (2.3), die Rückwand (2.4) und der obere Boden (2.5), vorzugsweise auch die optionale Mittelwand (2.6) des Korpus (2), und der untere Boden (3.1), die linke Seitenwand (3.2), die rechte Seitenwand (3,3) und die Vorderwand (3.4) des Einsatzes (3) auf Ihren äußeren Seiten mit einem wärmeisolierendem Material versehen sind, vorzugsweise mit extrudiertem Polystyrol (XPS-Hartschaum), insbesondere Styrodur der BASF oder dergleichen, besonders bevorzugt mit einer Stärke in einem Bereich von 10 mm bis 50 mm, vorzugsweise 15 mm.

12. Behälter (1) nach einem der vorhergehenden Ansprüche 1 bis 11, **dadurch gekennzeichnet, dass** der Korpus (2) aus einem inneren Korpuselement (2.7) aus Blech, vorzugsweise Feinblech, und aus einem äußeren Korpuselement (2.8) aus extrudiertem Polystyrol (XPS-Hartschaum), insbesondere Styrodur der BASF oder dergleichen, gefertigt ist, wobei das innere Korpuselement (2.7) in das äußere Korpuselement (2.8) eingesetzt und mit diesem fest verbunden ist, vorzugsweise mittels Verklebung.

13. Behälter (1) nach einem der vorhergehenden Ansprüche 1 bis 12, **dadurch gekennzeichnet, dass** der Einsatz (3) aus einem inneren Einsatzelement (3.5) aus Blech, vorzugsweise Feinblech, und aus einem äußeren Einsatzelement (3.6) aus extrudiertem Polystyrol (XPS-Hartschaum), insbesondere Styrodur der BASF oder dergleichen, gefertigt ist, wobei das innere Einsatzelement (3.5) in das äußere Einsatzelement (3.6) eingesetzt und mit diesem fest verbunden ist, vorzugsweise mittels Verklebung.

14. Behälter (1) nach einem der vorhergehenden Ansprüche 1 bis 13, **dadurch gekennzeichnet, dass** der Korpus (2) mit Einsätzen (3) unterschiedlicher Abmessungen versehen bzw. versehbar ist.

15. Behälter (1) nach einem der vorhergehenden Ansprüche 1 bis 14, wobei der Korpus (2) äußere Abmessungen mit einer Breite in einem im Bereich von 570 mm bis 700 mm, vorzugsweise 645 mm, mit einer Höhe in einem im Bereich von 350 mm bis 500 mm, vorzugsweise 420 mm, und mit einer Tiefe in einem im Bereich von 280 mm bis 400 mm, vorzugsweise 384 mm, aufweist.

16. Behälter (1) nach einem der Ansprüche 1 bis 15, wobei Entlüftungsöffnungen und/oder Entlüftungskanäle seitens des Korpus (2) und/oder des wenigstens einen Einsatzes (3) vorgesehen sind, über welche vorzugsweise Kondenswasser abführbar ist.

## Claims

1. A portable container (1) for transporting freshly prepared food and/or goods or products,
comprising
a substantially cuboid body (2) open at a front side,
with
a bottom (2.1), a left side wall (2.2), a right side wall (2.3), a rear wall (2.4) and a top (2.5), optionally or as required with at least one preferably rigid central wall (2.6) running parallel to the side walls (2.2, 2.3)
and
at least one insert (3) for holding freshly prepared food and/or goods or products,
with
a lower base (3.1), a left side wall (3.2), a right side wall (3.3) and a front wall (3.4),
wherein the insert (3) is open at the top, opposite the base (3.1), and can be slid horizontally into the body (2) at the front of the body (2) or pulled completely out of the body (2),
**characterised in that**
the insert is open at a rear side opposite the front wall (3.4).

2. Container (1) according to claim 1, wherein the left side wall (3.2) and the right side wall (3.3) of the insert (3) each have a longitudinal web (4), by means of which the insert (3) is secured on the side of the left side wall (2.2) and the right side wall (2.3) of the body (2), on the side of the left side wall (2.2) and the centre wall (2.6) of the body (2), or by means of correspondingly formed longitudinal joints (5) on the right-hand side wall (2.3) and the centre wall (2.6) of the body (2), into the body (2) or out of the body (2).

3. Container (1) according to claim 1 or claim 2, wherein the lower base (2.1) of the body (2) is provided with at least one support leg (9) that can be lowered vertically to the ground and is preferably height- or length-adjustable, wherein a height or length adjustment of up to 500 mm is provided or made possible, particularly preferably being infinitely variable.

4. Container (1) according to any one of claims 1 to 3, wherein the front wall (3.4) of the insert (3) comprises a handle (6) for inserting the insert (3) into the body (2) or for withdrawing the insert (3) from the body (2) and for handling the insert (3) when it is fully withdrawn from the body (2).

5. Container (1) according to any one of claims 1 to 4, wherein the left side wall (2.2) and the right side wall (2.3) of the body (2) each comprise a handle (7) for carrying the container (1).

6. Container (1) according to any one of claims 1 to 5, wherein adjustable carrying straps or carrying straps (8) for carrying the container (1) are attached or can be attached to the left side wall (2.2), the right side wall (2.3) and/or the rear wall (2.4) of the body (2), which allow a person to carry the container (1) on their back or in front of their body in the manner of a rucksack, preferably with shoulder straps, optionally or as required with a hip belt.

7. Container (1) according to claim 6, wherein the carrying straps or carrying straps (8) are detachably secured, preferably by means of a form-fitting connection through the interlocking of the connecting elements on the part of the carrying straps or carrying straps (8) and the body (2), and/or by means of magnets or a magnetic connection between the carrying straps (8) and the body (2).

8. Container (1) according to any one of claims 1 to 7, wherein the upper base (2.5) of the body (2) is usable as a table surface, preferably according to any one of claims 3 to 7 when the at least one support leg (9) is in the lowered position.

9. Container (1) according to any one of claims 1 to 8, wherein the upper base (2.5) of the body (2) is formed with or provided with a non-slip surface.

10. Container (1) according to any one of claims 1 to 9, wherein the body (2) or the lower base (2.1), the left side wall (2.2), the right side wall (2.3), the rear wall (2.4) and the upper base (2.5), as well as the optional central wall (2.6) of the body (2) and the insert (3) or the lower base (3.1), the left side wall (3.2), the right-hand side wall (3.3) and the front wall (3.4) of the insert (3) are made of sheet metal, preferably thin sheet metal, preferably of aluminium or an aluminium alloy, particularly preferably with a thickness in the range of 0.8 mm to 3.0 mm, preferably 1 mm.

11. Container (1) according to claim 10, wherein the lower base (2.1), the left side wall (2.2), the right side wall (2.3), the rear wall (2.4) and the upper base (2.5), preferably also the optional central wall (2.6) of the body (2), and the lower base (3.1), the left side wall (3.2), the right side wall (3.3) and the front wall (3.4) of the insert (3) are provided on their outer sides with a heat-insulating material, preferably extruded polystyrene (XPS rigid foam), in particular Styrodur from BASF or the like, most preferably with a thickness in the range of 10 mm to 50 mm, preferably 15 mm.

12. Container (1) according to any one of the preceding claims 1 to 11, **characterised in that** the body (2) comprises an inner body element (2.7) made of sheet metal, preferably thin sheet metal, and an outer body element (2.8) made of extruded polystyrene (XPS rigid foam), in particular Styrodur from BASF or the like, wherein the inner body element (2.7) is inserted into the outer body element (2.8) and is firmly connected thereto, preferably by means of bonding.

13. Container (1) according to any one of the preceding claims 1 to 12, **characterised in that** the insert (3) comprises an inner insert element (3.5) made of sheet metal, preferably thin sheet metal, and an outer insert element (3.6) made of extruded polystyrene (XPS rigid foam), in particular Styrodur from BASF or the like, wherein the inner insert element (3.5) is inserted into the outer insert element (3.6) in a e manner and is firmly connected thereto, preferably by means of bonding.

14. Container (1) according to any one of the preceding claims 1 to 13, **characterised in that** the body (2) is provided with, or can be provided with, inserts (3) of different dimensions.

15. Container (1) according to any one of the preceding claims 1 to 14, wherein the body (2) has external dimensions with a width in the range of 570 mm to 700 mm, preferably 645 mm, a height in the range of 350 mm to 500 mm, preferably 420 mm, and a depth in the range of 280 mm to 400 mm, preferably 384 mm.

16. Container (1) according to any one of claims 1 to 15, wherein ventilation openings and/or ventilation channels are provided in the body (2) and/or the at least one insert (3), through which condensation water can preferably be drained.

## Revendications

1. Récipient portable (1) destiné au transport de plats fraîchement préparés et/ou de marchandises ou de produits,
comprenant
un corps (2) essentiellement parallélépipédique, ouvert sur un côté avant,
avec
un fond inférieur (2.1), une paroi latérale gauche (2.2), une paroi latérale droite (2.3), une paroi arrière (2.4) et un fond supérieur (2.5), comportant en option ou selon les besoins au moins une paroi médiane (2.6), de préférence rigide, s'étendant parallèlement aux parois latérales (2.2, 2.3)
et
au moins un insert (3) destiné à recevoir des plats fraîchement préparés et/ou des marchandises ou des produits,
comprenant
un fond inférieur (3.1), une paroi latérale gauche (3.2), une paroi latérale droite (3.3) et une paroi avant (3.4),
l'insert (3) étant ouvert en haut, à l'opposé du fond (3.1), et pouvant être inséré horizontalement dans le corps (2) par l'avant ou retiré complètement du corps (2),
**caractérisé en ce que**
l'insert est ouvert sur un côté arrière, opposé à la paroi avant (3.4).

2. Conteneur (1) selon la revendication 1, dans lequel la paroi latérale gauche (3.2) et la paroi latérale droite (3.3) de l'insert (3) comportent chacune une nervure longitudinale (4) au moyen de laquelle l'insert (3) peut être inséré, du côté de la paroi latérale gauche (2.2) et de la paroi latérale droite (2.3) du corps (2), par la paroi latérale gauche (2.2) et la paroi centrale (2.6) du corps (2), ou par des joints longitudinaux (5) formés de manière correspondante du côté de la paroi latérale droite (2.3) et de la paroi centrale (2.6) du corps (2).

3. Conteneur (1) selon la revendication 1 ou la revendication 2, dans lequel le fond inférieur (2.1) du corps (2) est muni d'au moins un pied d'appui (9) pouvant être abaissé verticalement vers le sol, de préférence réglable en hauteur ou en longueur, un réglage en hauteur ou en longueur allant jusqu'à 500 mm étant de préférence est prévue ou rendue possible, de préférence en continu.

4. Conteneur (1) selon l'une des revendications 1 à 3, la paroi avant (3.4) de l'insert (3) comportant une poignée (6) pour insérer l'insert (3) dans le corps (2) ou pour retirer l'insert (3) du corps (2) ainsi que pour la manipulation de l'insert (3) entièrement retiré du corps (2).

5. Récipient (1) selon l'une des revendications 1 à 4, dans lequel la paroi latérale gauche (2.2) et la paroi latérale droite (2.3) du corps (2) comportent chacune une poignée (7) pour porter le récipient (1).

6. Conteneur (1) selon l'une des revendications 1 à 5, dans lequel des sangles de transport réglables ou des sangles de transport (8) sont fixées ou peuvent être fixées sur la paroi latérale gauche (2.2), la paroi latérale droite (2.3) et/ou la paroi arrière (2.4) du corps (2) pour porter le conteneur (1), ce qui permet à une personne de porter le conteneur (1) à la manière d'un sac à dos, sur le dos ou devant le corps, de préférence avec des bretelles, ou éventuellement avec une ceinture.

7. Conteneur (1) selon la revendication 6, dans lequel les sangles de transport (8) peuvent être fixées de manière amovible, de préférence au moyen d'une liaison par complémentarité de forme par l'emboîtement des éléments de liaison des sangles de transport (8) et du corps (2), et/ou au moyen d'aimants ou d'une liaison magnétique entre les sangles de transport (8) et le corps (2).

8. Conteneur (1) selon l'une des revendications 1 à 7, dans lequel le fond supérieur (2.5) du corps (2) peut être utilisé comme surface de table, de préférence selon l'une des revendications 3 à 7 lorsque le ou les pieds de support (9) sont abaissés.

9. Conteneur (1) selon l'une des revendications 1 à 8, dans lequel le fond supérieur (2.5) du corps (2) est formé ou muni d'une surface antidérapante, ou peut être muni d'une telle surface.

10. Conteneur (1) selon l'une des revendications 1 à 9, dans lequel le corps (2) ou le fond inférieur (2.1), la paroi latérale gauche (2.2), la paroi latérale droite (2.3), la paroi arrière (2.4) et le fond supérieur (2.5), ainsi que la paroi centrale optionnelle (2.6) du corps (2) et l'insert (3) ou le fond inférieur (3.1), la paroi latérale gauche (3.2), la paroi latérale droite (3.3) et la paroi avant (3.4) de l'insert (3) sont fabriquées en tôle, de préférence en tôle fine, de préférence en tôles d'aluminium ou d'un alliage d'aluminium, de préférence avec une épaisseur comprise entre 0,8 mm et 3,0 mm, de préférence 1 mm

11. Conteneur (1) selon la revendication 10, dans lequel le fond inférieur (2.1), la paroi latérale gauche (2.2), la paroi latérale droite (2.3), la paroi arrière (2.4) et le fond supérieur (2.5), de préférence également la paroi centrale optionnelle (2.6) du corps (2), et le fond inférieur (3.1), la paroi latérale gauche (3.2), la paroi latérale droite (3.3) et la paroi avant (3.4) de l'insert (3) sont pourvus, sur leurs faces extérieures, d'un matériau thermo-isolant, de préférence du polystyrène extrudé (mousse rigide XPS), en particulier du Styrodur de BASF ou similaire, de préférence d'une épaisseur comprise entre 10 mm et 50 mm, de préférence 15 mm.

12. Conteneur (1) selon l'une des revendications 1 à 11 précédentes, **caractérisé en ce que** le corps (2) est constitué d'un élément de corps intérieur (2.7) en tôle, de préférence en tôle fine, et d'un élément de corps extérieur (2.8) en polystyrène extrudé (mousse rigide XPS), en particulier du Styrodur de BASF ou similaire, l'élément de corps intérieur (2.7) étant inséré dans l'élément de corps extérieur (2.8) et solidement relié à celui-ci, de préférence par collage.

13. Conteneur (1) selon l'une des revendications 1 à 12 précédentes, **caractérisé en ce que** l'insert (3) est constitué d'un élément d'insertion intérieur (3.5) en tôle, de préférence en tôle fine, et d'un élément d'insertion extérieur (3.6) en polystyrène extrudé (mousse rigide XPS), en particulier du Styrodur de BASF ou similaire, l'élément d'insertion intérieur (3.5) étant inséré de maniè e dans l'élément d'insertion extérieur (3.6) et solidement relié à celui-ci, de préférence par collage.

14. Récipient (1) selon l'une des revendications 1 à 13 précédentes, **caractérisé en ce que** le corps (2) est muni ou peut être muni d'inserts (3) de dimensions différentes.

15. Conteneur (1) selon l'une des revendications 1 à 14 précédentes, le corps (2) présentant des dimensions extérieures avec une largeur comprise entre 570 mm et 700 mm, de préférence 645 mm, une hauteur comprise entre 350 mm et 500 mm, de préférence 420 mm, et d'une profondeur comprise entre 280 mm et 400 mm, de préférence 384 mm.

16. Conteneur (1) selon l'une des revendications 1 à 15, dans lequel des ouvertures d'aération et/ou des canaux d'aération sont prévus sur le corps (2) et/ou sur au moins un insert (3), par lesquels l'eau de condensation peut de préférence être évacuée.
